(19) Europäisches Patentamt
European Patent Office
Office européen des brevets

(11) Publication number: 0 358 096 A2

(12) # EUROPEAN PATENT APPLICATION

(21) Application number: 89115961.8

(22) Date of filing: 30.08.89

(51) Int. Cl.[5]: C08G 59/14 , C09D 163/00

(30) Priority: 07.09.88 US 241517

(43) Date of publication of application: 14.03.90 Bulletin 90/11

(84) Designated Contracting States: AT BE CH DE ES FR GB IT LI LU NL SE

(71) Applicant: THE DOW CHEMICAL COMPANY
2030 Dow Center Abbott Road P.O. Box 1967
Midland Michigan 48640-1967(US)

(72) Inventor: Massingill, John L., Jr.
410 Forest Drive
Lake Jackson Texas 77566(US)

(74) Representative: Sternagel, Hans-Günther, Dr. et al
Patentanwälte Dr. Michael Hann Dr. H.-G. Sternagel Sander Aue 30
D-5060 Bergisch Gladbach 2(DE)

(54) **Organic solvent solutions of phosphate esters of epoxy resins.**

(57) Nonaqueous organic solvent solutions of phosphate esters of epoxy resins. Coating compositions containing these compositions have improved thermal properties as compared to like compositions which are dispersed in water.

EP 0 358 096 A2

# ORGANIC SOLVENT SOLUTIONS OF PHOSPHATE ESTERS OF EPOXY RESINS

The present invention pertains to organic solutions of phosphate esters of epoxy resins.

Advanced aromatic epoxy resins are well known for their extremely useful combination of properties such as flexibility, adhesion, corrosion resistance, chemical resistance and solvent resistance. Unfortunately, they also have some well known disadvantages, for example, sensitivity to ultraviolet light, relatively high viscosities and limited formability.

Epoxy phosphate esters have been prepared by various processes for water thinnable coating formulations. It has been unexpectedly discovered that these phosphate esters, when employed in non-aqueous formulations, give outstanding barrier properties to the resulting coatings when compared to the base resins from which they are derived. Epoxy resin phosphate esters and methylol-containing curing agents can be formulated to give bake coatings with exceptional improvements in flexibility and formability with retention of traditional epoxy protection.

The present invention is directed to a non-aqueous solution composition which comprises a mixture of

(A) the product resulting from reacting

(1) at least one epoxy-containing compound containing an average of more than one vicinal epoxide group per molecule; with

(2) at least one phosphorous-containing compound; and

(B) at least one organic solvent for component (A). Optionally, water may be reacted with components (1) and (2) to form the product of component (A).

More particularly, the present invention is directed to a non-aqueous solution composition which comprises a mixture of

(A) the product resulting from reacting

(1) at least one epoxy-containing compound containing an average of more than one vicinal epoxide group per molecule; with

(2) at least one phosphorus-containing compound selected from the group consisting of

(a) phosphoric acid;

(b) super phosphoric acid; and

(c) a combination of (a) and (b); and

wherein component (2) is employed in an amount which provides a ratio of moles of component (2) to component (1) of from 0.02:1 to 5:1; and

(B) at least one organic solvent for component (A); and wherein component (A) is employed in an amount of from 100 to 10 percent by weight based upon the combined weight of components (A) and (B); and component (B) is employed in an amount of from 10 to 90 percent by weight based upon the combined weight of components (A) and (B).

Even more particularly, the present invention pertains to a composition containing as a first component (A) a phosphate ester of an epoxy resin and as a second component (B) one or more organic solvents. The composition of the present invention is a non-aqueous solution or a composition which is essentially free of water. Curable compositions of the present invention can also be prepared.

Component (A) of the present invention, i.e., the epoxy phosphate ester compositions of the present invention are prepared by any suitable means such as described by Martin in U.S. Patent 4,289,812, by Martin in U.S. Patent 4,164,487, by Martin et al. in U.S. Patent 4,256,844 or by Langer et al. in U.S. Patent 4,613,661.

Suitably, the epoxy phosphate ester can be prepared by reacting as a first component (1) an epoxy resin having an average of more than one vicinal epoxy group per molecule with a second component (2) a phosphoric acid source at a temperature suitably from 50°C to 250°C, more suitably from 100°C to 200°C, most suitably from 110°C to 180°C; at pressures suitably from 0 psia to 200 psia, more suitably from 0 psia to 150 psia, most suitably from 0 psia to 100 psia for a period of time suitably from 0.2 to 10, more suitably from 0.5 to 6, most suitably from 1 to 3 hours. Higher reaction temperatures require shorter reaction times to complete the reaction, whereas lower temperatures require longer reaction times to complete the reaction. The reactants are employed in quantities which provide a molar ratio of phosphorus-containing compound to epoxy-containing compound suitably from 0.02:1 to 5:1, more suitably from 0.2:1 to 2:1, most suitably from 0.5:1 to 1:1.

In preparing component (A) of the present invention, if desired, the epoxy groups of the epoxy-containing compound, if any remain after reaction of the epoxy-containing compound with the phosphorus-containing compound, can be totally or partially hydrolyzed by reaction with water. The hydrolysis reaction can be conducted in the manner described by Davis et al. in U.S. Patent 4,340,713, and by Cavitt in U.S.

Patent 4,404,335. The water as optional component (3) can be employed in an amount corresponding suitably to a ratio of moles of water per mole of epoxy resin employed of from zero:1 to 100:1, more suitably from 0:1 to 50:1, most preferably from 0:1 to 2:1.

Suitable phosphoric acid sources which can be employed to prepare the epoxy phosphate esters include, for example, phosphoric acid, super phosphoric acid, other condensed forms of phosphoric acid, aqueous solutions containing at least 18% $H_3PO_4$, phosphoric esters and combinations thereof.

Suitable epoxy resins which can be employed to prepare the epoxy phosphate esters include any epoxy resin having an average of more than one vicinal epoxy group per molecule. These include, aliphatic, cycloaliphatic, or aromatic based epoxy resins. Suitable such epoxy resins include, for example but not to be limited to, those epoxy resins represented by the following formulas I, II, III, IV or V

Formula I

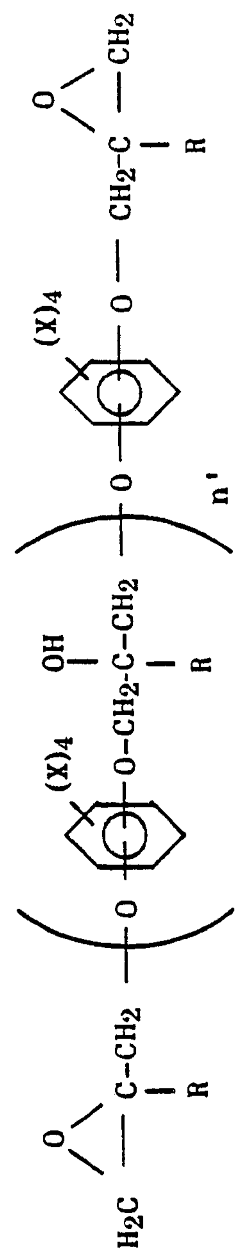

Formula II

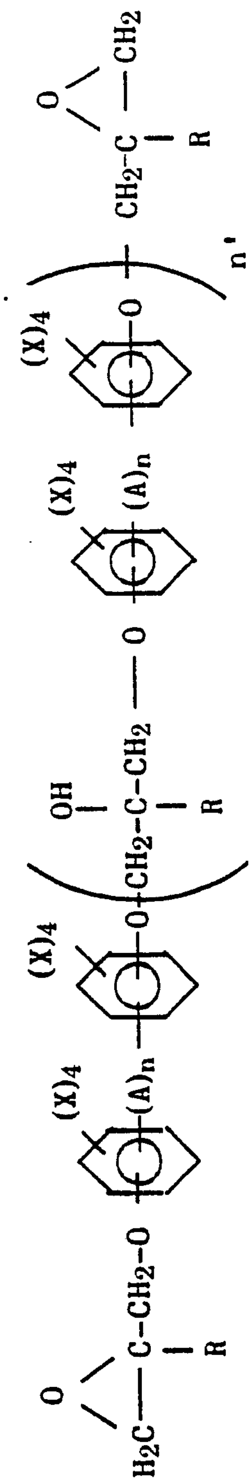

Formula III

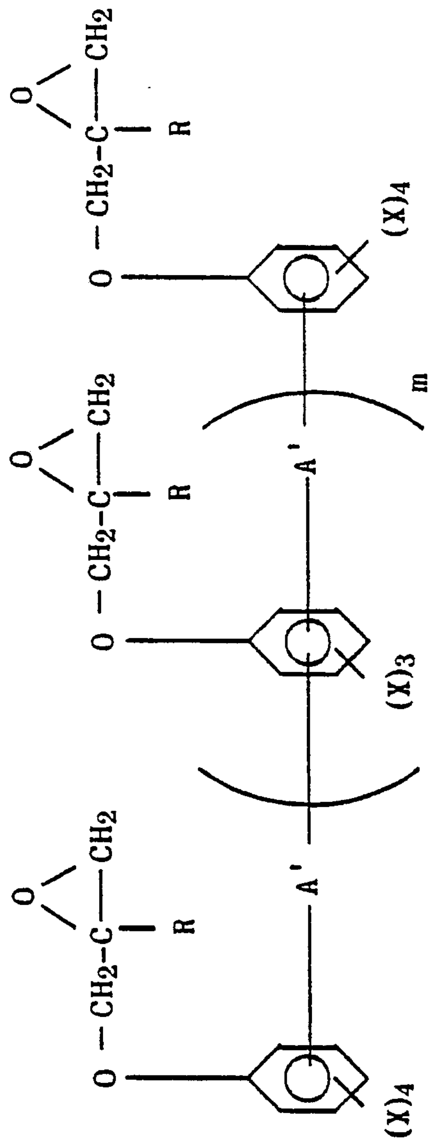

Formula IV

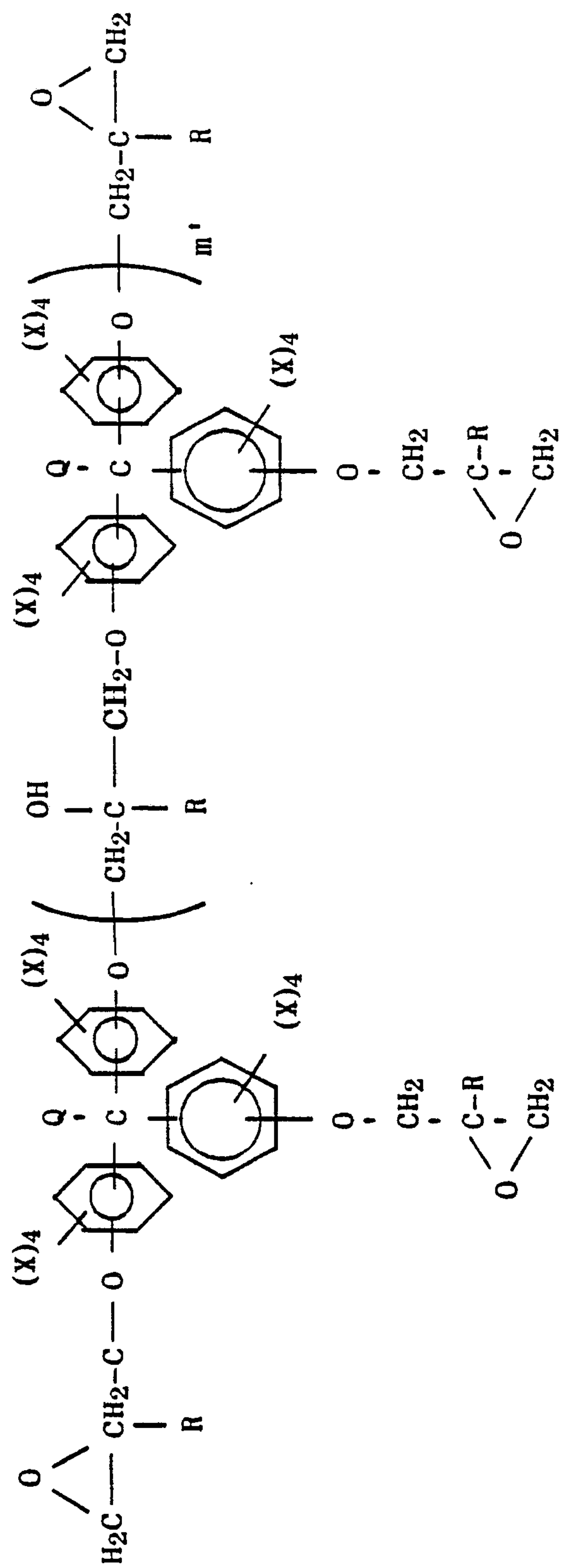

Formula V

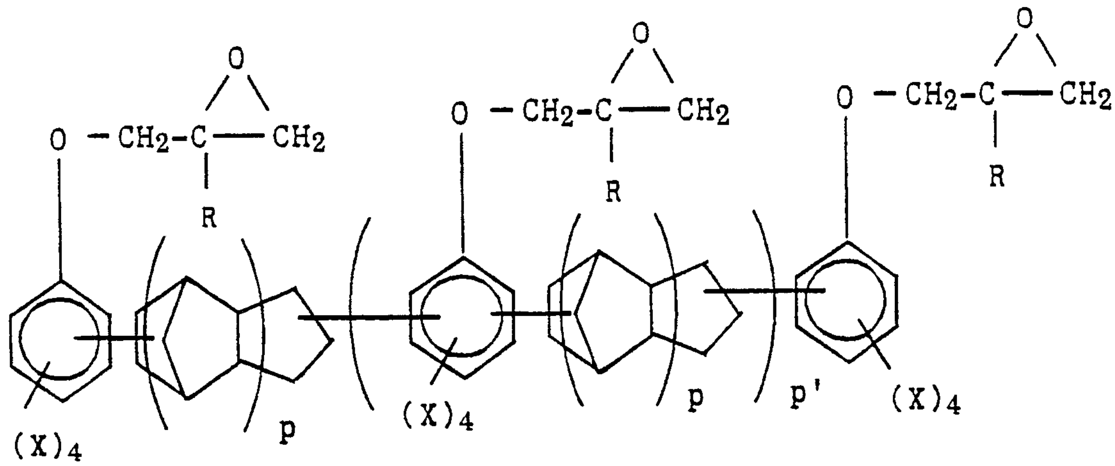

wherein each A is independently a divalent hydrocarbyl group having suitably from 1 to 12, more suitably from 1 to 6, most suitably from 1 to 4, carbon atoms; each A′ is independently a divalent hydrocarbyl group having from 1 to 10, more suitably from 1 to 4, most suitably from 1 to 2, carbon atoms; each Q is independently hydrogen or an alkyl group having from 1 to 4 carbon atoms; each R is independently hydrogen or an alkyl group having from 1 to 3 carbon atoms; each X is independently hydrogen, a hydrocarbyl or hydrocarbyloxy group having suitably from 1 to 12, more suitably from 1 to 6, most suitably from 1 to 4, carbon atoms or a halogen atom, preferably chlorine or bromine; m has a value suitably from 0.01 to 8, more suitably from 1 to 6, most suitably from 2 to 4; n has a value of zero or 1; n′ has an average value suitably from 0 to 200, more suitably from 0 to 150, most suitably from 0 to 100; each p suitably has a value from zero to 10, more suitably from 0 to 8, most suitably from 0 to 6; and each p′ suitably has a value from zero to 8, more suitably from 1 to 6, most suitably from 2 to 4.

The epoxy resins which are employed to prepare the phosphorylated and optionally fully or partially hydrolyzed epoxy resins of the present invention suitably have epoxide equivalent weights (EEWs) of from 90 to 100,000, more suitably from 170 to 50,000, most suitably from 400 to 10,000.

Component (B) of the present invention comprises at least one organic solvent for component (A). Suitable organic solvents which can be employed herein include, for example, alcohols, glycols, glycol ethers, ketones, aromatic hydrocarbons, cyclic ethers, esters, chlorinated solvents and combinations thereof. Particularly suitable solvents include, for example, toluene, benzene, xylene, methyl ethyl ketone, methyl isobutyl ketone, diethylene glycol methyl ether, dipropylene glycol methyl ether, ethylene glycol hexyl ether, mixtures of acetone and methylene chloride, mixtures of alcohols and methylene chloride, any and combination thereof.

The amount of solvent to be employed is practically any amount which provides the system with the desired application viscosity i.e., viscosities are made appropriate for the coating application equipment used. Viscosities can range, for example, from 100 (0.1 pascal second) to 1000 centipoise (1 pascal second); more suitably from 100 cps (0.1 Pa•s) to 500 cps (0.5 Pa•s); and even more suitably from 100 cps (0.1 Pa•s) to 300 cps (0.3 Pa•s). Suitable amounts of solvent used include, for example, from 10 to 90, more suitably from 10 to 80, most suitably from 20 to 80, parts by weight based upon the combined weight of components (A) and (B).

The phosphorylated and, if desired, totally or partially hydrolyzed epoxy resins of the present invention can be cured by the use of curing agents which cure through the aliphatic hydroxyl groups contained in the phosphorylated and optionally totally or partially hydrolyzed epoxy resin. Suitable such curing agents include, for example, alkylolated urea-aldehyde resins, alkylolated melamine-aldehyde epoxy resins, polyisocyanates, blocked polyisocyanates, alkylolated phenol-aldehyde resins and combinations thereof. Particularly suitable curing agents include, for example, methylolated urea-formaldehyde resins, methylolated melamine-formaldehyde resins, methylolated phenol-formaldehyde resins, toluene diisocyanate, 4,4′-diphenylmethanediisocyanate, isophorone diisocyanate and its liquid derivatives sold under the tradenames of Rubinate™ LF-168 or Rubinate™ LF-179 by Rubinate Chemicals, Inc. of Wilmington, Delaware, or ISONATE™ 143L or ISONATE™ I81 by The Dow Chemical Company of Midland, Michigan, a biuret or isocyanurate from hexamethylene diisocyanate, and a cyclic trimer of hexamethylene diisocyanate and toluene diisocyanate.

The isocyanates can also be prepolymers of the aforementioned isocyanates and polyols such as polypropylene glycols, triols such as trimethylolpropane or glycerine or their reaction products with propylene oxide, butylene oxide or mixtures thereof having equivalent weights of from 85 to 1000. The isocyanates can be blocked with phenols, such as phenol, 4-chlorophenol, o-secbutylphenol, lactams such as caprolactam and ketoximes or aldoximes such as acetaldehyde oxime or methyl ethyl ketoxime, and any combination thereof.

Coatings capable of being cured at room temperature can be obtained by use of the aforementioned isocyanates which contain no blocking agent. From an industrial standpoint, the blocked isocyanates are preferred since they will provide one package systems. The ketoxime or lactam blocked isocyanates are preferred from an ecology standpoint and for providing the appropriate cure temperatures.

The curing agents are employed in any quantity which will effectively cure the phosphorylated and optionally, totally or partially hydrolyzed epoxy resin. Suitable such effective amounts will depend upon the particular epoxy resin being cured and the particular curing agent being employed; however, suitable such amounts can include, for example from 1 to 90, more suitably from 4 to 50, most suitably from 4 to 30, percent by weight based upon the weight of the resin.

The compositions of the present invention can be blended with other materials or additives such as fillers, pigments, dyes, flow modifiers, thickeners, reinforcing agents, catalysts, and combinations thereof.

The additives are added to the composition of the present invention in functionally equivalent, amounts, for example, pigments and/or dyes are added to the composition in quantities which will provide the composition with the desired color. Pigments and/or dyes, for example, are suitably employed in amounts of from 20 to 200, more suitably from 50 to 150, most suitably from 50 to 100 percent by weight based upon the weight of the resin and curing agent.

The modifiers such as thickeners and flow modifiers can be suitably employed in amounts of from 0.01 to 20, more suitably from 0.1 to 10, most suitably from 0.1 to 2 percent by weight based upon the weight of resin and curing agent.

Reinforcing materials which can be employed herein include, for example, natural and synthetic fibers in the form of, for example, woven, mat, monofilament and multifilament. Suitable reinforcing materials include, for example, glass, ceramics, nylon, rayon, cotton, aramid, graphite and combinations thereof.

Suitable fillers which can be employed herein include, for example, inorganic oxides, ceramic microspheres, plastic microspheres and combinations thereof.

The fillers can be employed in amounts suitably from 5 to 100, more suitably from 10 to 50, most suitably from 10 to 30 percent by weight based upon the weight of the resin and curing agent.

The following examples are illustrative of the invention.

Example 1 Phosphorylation of Advanced Epoxy Resin, EEW 1675, with Approximately 1 phr $H_3PO_4$ (as 110 Percent Acid) in Ethylene Glycol Monobutyl Ether (70 Percent Solids)

An advanced bisphenol A based epoxy resin having an epoxide equivalent weight (EEW) of 1675 available from The Dow Chemical Company as D.E.R.™ 667, (500 grams, 0.06 mole) and solvent, ethylene glycol monobutyl ether (193 grams, 1.63 moles), were placed in a 2-liter round bottom, 5-neck pyrex flask equipped with a mechanical stirrer, temperature controller, nitrogen pad, condenser and addition funnel. The resin was stirred slowly as the temperature was raised to 125°C to dissolve the resin. When the resin was dissolved, super phosphoric acid (5 grams, 0.054 mole), in 21 grams solvent was added to the resin solution and allowed to react for 30 minutes. Water (10 grams, 0.56 mole) was added and the mixture stirred for two hours to give the epoxy resin phosphate ester solid solution (70 percent solids).

The above resin was formulated with various levels of a phenol/formaldehyde resole curing agent available from BTL Specialty Resins Corp. as METHYLON™ 75108, to give formulations with 10 percent, 20 percent and 30 percent crosslinker. The solvent used to reduce application viscosity was DuPont Dibasic ester.

The above formulations were coated onto tin-free steel can stock using a drawdown bar. The tin-free steel panels had a monolayer of chromium oxide on the surface. Prior to coating, the panels were washed with Aromatic 100 solvent from Exxon to remove oil and dirt particles followed by drying in an oven at 400°F (204.4°C) for 2 minutes. The coatings were cured by baking in an electric convection oven at 400°F (204.4°C) for 8, 10 or 15 minutes. The following tests were performed on the cured panels and the results are given in Table I.

METHYL ETHYL KETONE (MEK) RESISTANCE was determined by rubbing the coating surface with a 2 pound ball-pein hammer that had cheesecloth (10 plies) wrapped around the ball. The cheesecloth was

saturated with MEK. No force other than the natural weight of the hammer and the force needed to guide the hammer back and forth across the coating was applied. One back and forth movement constituted one double rub. Counting was stopped when the coating was scratched or marred.

WEDGEBEND FLEXIBILITY was determined according to ASTM D 3281-84 modified by using an 8X jewelers lighted magnifying glass to read the test panels. The results were recorded as millimeters of failure from the TO end of the panel.

IMPACT RESISTANCE was performed at 20 inch-pounds (usually just short of rupturing the tin-free steel (TFS)) according to ASTM D-2794-84. The panel was tested for adhesion by taping it with ScotchTM 610 adhesive tape and removing the tape in a quick smooth motion. Adhesion failure or cracking of the coating was visualized by acidic copper sulfate and the test panels read under an 8X jewelers lighted magnifying glass. The panels were rated as follows: 0 = no failure, 1 = failure.

STEAM PROCESS RESISTANCE was determined by placing the test panels in a steam autoclave for 90 minutes at 250 °F (121.1 °C) at a pressure of about 15 psig (103.4 kPa). The test panels were stressed with a simple U-shaped form prior to being placed in the autoclave. The test panels were removed from the autoclave, immediately (within 15 minutes) dried and inspected for blush. The ratings were ≧zero for no blush and 1 for a slight haziness and 2 for a milky white appearance. The stressed area of the panel was cut with a razor blade in an X pattern. ScotchTM #610 adhesive tape was rubbed over the X and removed in a smooth, rapid motion. The adhesion ratings were 0 for no loss, 1 for slight ticking, 2 for a loss of 5 percent of the coating, 3 for a 10 percent loss of the coating and 4 for a gross failure, at least a loss of ≧20 percent of the coating.

FILM THICKNESS was determined by using a Fischer Multiscope. This tester determines film thickness by using magnetic properties of the steel substrate calibrated against a standard on the bare (film free) substrate. Each panel had an average of fifteen measurements to determine the thickness of the panel. The range for acceptable coating thickness is approximately 0.13 to 0.35 mils (0.003302 to 0.00889 mm).

COMPARATIVE EXPERIMENT A

A solid bisphenol A based epoxy resin having an EEW of 1675 available from The Dow Chemical Company as D.E.R.TM 667 (40 grams) was mixed with solvent (ethylene glycol monobutyl ether, 50 grams) along with phosphoric acid (as 85 percent aqueous solution, 0.6 gram, 1 percent by weight of resin solids) and mixed overnight on a roller at about 35 °C until dissolved. Then a phenol/formaldehyde resole curing agent available from BTL Specialty Resins Corp. as METHYLONTM 75108, 10 grams, 20 percent by weight of resin solids and a silicone flow modifier available from The General Electric Co. as SR882, 0.2 gram, were added. This formulation was mixed by rolling for one hour. Test panels were coated, baked at 400 °F (204.4 °C) for either 8, 10 or 15 minutes and tested as in Example 1. The results are given in Table I. The amount of curing agent used was adjusted to also give formulations containing 10 percent and 30 percent by weight. These formulations were coated onto test panels, baked, and tested as described above. The results are given in Table I.

TABLE I

| SAMPLE NO. | RESIN | % X-LINKER BTL 75108 | DRY FILM THICK. MILS | BAKE TIME | MEK DR | WEDGEBEND LOSS, mm | AUTOCLAVE | | 20 INCH-LB REVERSE IMPACT |
|---|---|---|---|---|---|---|---|---|---|
| | | | | | | | BLUSH | ADHESION | |
| 1 | C.E. A* | 10 | 0.29 | 8 | 60 | 21 | 0 | 0 | 1 |
| 2 | C.E. A* | 10 | 0.23 | 10 | 50 | 34 | 0 | 0 | 0 |
| 3 | C.E. A* | 10 | 0.19 | 15 | 30 | 21 | 0 | 0 | 1 |
| 4 | C.E. A* | 20 | 0.35 | 8 | 210 | 45 | 0 | 1 | 0 |
| 5 | C.E. A* | 20 | 0.21 | 10 | 220 | 75 | 0 | 1 | 1 |
| 6 | C.E. A* | 20 | 0.20 | 15 | 250 | 77 | 0 | 0 | 0 |
| 7 | C.E. A* | 30 | 0.25 | 8 | 400 | 80 | 0 | 1 | 1 |
| 8 | C.E. A* | 30 | 0.31 | 10 | 500 | 45 | 0 | 0 | 1 |
| 9 | C.E. A* | 30 | 0.19 | 15 | 500 | 47 | 0 | 0 | 1 |

*Not an example of the invention.

TABLE I (Continued)

| SAM-PLE NO. | RESIN | % X-LINKER BTL 75108 | DRY FILM THICK. MILS | BAKE TIME | MEK DR | WEDGEBEND LOSS, mm | AUTOCLAVE | | 20 INCH-LB REVERSE IMPACT |
|---|---|---|---|---|---|---|---|---|---|
| | | | | | | | BLUSH | ADHESION | |
| 10 | Ex. 1 | 10 | 0.13 | 8 | 10 | 24 | 0 | 0 | 1 |
| 11 | Ex. 1 | 10 | 0.15 | 10 | 10 | 21 | 0 | 1 | 1 |
| 12 | Ex. 1 | 10 | 0.22 | 15 | 10 | 30 | 0 | 0 | 0 |
| 13 | Ex. 1 | 20 | 0.16 | 8 | 70 | 30 | 0 | 0 | 1 |
| 14 | Ex. 1 | 20 | 0.17 | 10 | 40 | 29 | 0 | 1 | 1 |
| 15 | Ex. 1 | 20 | 0.21 | 15 | 90 | 28 | 0 | 0 | 0 |
| 16 | Ex. 1 | 30 | 0.18 | 8 | 70 | 39 | 0 | 1 | 0 |
| 17 | Ex. 1 | 30 | 0.23 | 10 | 120 | 43 | 0 | 1 | 1 |
| 18 | Ex. 1 | 30 | 0.18 | 15 | 130 | 31 | 0 | 1 | 1 |

Example 2 Phosphorylation of Advanced Epoxy Resin, EEW 3000, with 0.82 phr $H_3PO_4$ (as 110 Percent Acid) in Ethylene Glycol Monobutyl Ether (50 Percent Solids)

A solid bisphenol A based epoxy resin having an EEW of 3000 available from The Dow Chemical Company as D.E.R.TM 669E was phosphorylated by the procedure of Example 1. Coatings were prepared and tested as described in Example 1. The results are given in Table II.

COMPARATIVE EXPERIMENT B

The procedure of Comparative Experiment A was used to formulate, coat and test a composition with the solid epoxy resin having an EEW of 3000 rather than the resin having an EEW of 1675. The results are given in Table II.

TABLE II

| SAM-PLE NO. | RESIN | % X-LINKER BTL 75108 | DRY FILM THICK. MILS | BAKE TIME | MEK DR | WEDGEBEND LOSS, mm | AUTOCLAVE | | 20 INCH-LB REVERSE IMPACT |
|---|---|---|---|---|---|---|---|---|---|
| | | | | | | | BLUSH | ADHESION | |
| 19 | C.E. B* | 10 | 0.22 | 8 | 40 | 41 | 0 | 1 | 1 |
| 20 | C.E. B* | 10 | 0.30 | 10 | 43 | 49 | 0 | 0 | 1 |
| 21 | C.E. B* | 10 | 0.37 | 15 | 50 | 35 | 0 | 0 | 0 |
| 22 | C.E. B* | 20 | 0.28 | 8 | 26 | 47 | 0 | 0 | 1 |
| 23 | C.E. B* | 20 | 0.18 | 10 | 60 | 42 | 0 | 1 | 1 |
| 24 | C.E. B* | 20 | 0.19 | 15 | 60 | 55 | 0 | 0 | 1 |
| 25 | C.E. B* | 30 | 0.15 | 8 | 250 | 80 | 0 | 0 | 1 |
| 26 | C.E. B* | 30 | 0.29 | 10 | 250 | 100 | 0 | 0 | 1 |
| 27 | C.E. B* | 30 | 0.43 | 15 | 500 | 100 | 1 | 1 | 1 |

*Not an example of the invention.

TABLE II (Continued)

| SAMPLE NO. | RESIN | % X-LINKER BTL 75108 | DRY FILM THICK. MILS | BAKE TIME | MEK DR | WEDGEBEND LOSS, mm | AUTOCLAVE | | 20 INCH-LB REVERSE IMPACT |
|---|---|---|---|---|---|---|---|---|---|
| | | | | | | | BLUSH | ADHESION | |
| 28 | Ex. 2 | 10 | 0.33 | 8 | 30 | 28 | 0 | 0 | 0 |
| 29 | Ex. 2 | 10 | 0.28 | 10 | 40 | 22 | 0 | 0 | 0 |
| 30 | Ex. 2 | 10 | 0.27 | 15 | 90 | 30 | 0 | 1 | 0 |
| 31 | Ex. 2 | 20 | 0.33 | 8 | 90 | 30 | 0 | 0 | 1 |
| 32 | Ex. 2 | 20 | 0.40 | 10 | 90 | 31 | 0 | 1 | 0 |
| 33 | Ex. 2 | 20 | 0.36 | 15 | 90 | 28 | 0 | 1 | 0 |
| 34 | Ex. 2 | 30 | 0.27 | 8 | 150 | 34 | 0 | 1 | 0 |
| 35 | Ex. 2 | 30 | 0.27 | 10 | 200 | 43 | 0 | 1 | 1 |
| 36 | Ex. 2 | 30 | 0.26 | 15 | 200 | 31 | 0 | 0 | 0 |

Example 3 Phosphorylation of Advanced Epoxy Resin, EEW 900, with 1 phr $H_3PO_4$ (as 110 Percent Acid) in Ethylene Glycol Monobutyl Ether (50 Percent Solids)

A solid bisphenol A based epoxy resin having an EEW of 900 available from The Dow Chemical Company as D.E.R.TM 664 was phosphorylated by the procedure of Example 1. Coatings were prepared and tested as described in Example 1. The results are given in Table III.

COMPARATIVE EXPERIMENT C

The procedure of Comparative Experiment A was used to formulate, coat and test a composition with the solid epoxy resin having an EEW of 900 rather than the resin having an EEW of 1675. The results are given in Table III.

TABLE III

| SAMPLE NO. | RESIN | % X-LINKER BTL 75108 | DRY FILM THICK. MILS | BAKE TIME | MEK DBL. RUBS | WEDGEBEND LOSS, mm | AUTOCLAVE | | 20 INCH-LB REVERSE IMPACT |
|---|---|---|---|---|---|---|---|---|---|
| | | | | | | | BLUSH | ADHESION | |
| 37 | C.E. C* | 10 | 0.15 | 8 | 2 | 100 | 0 | 0 | 1 |
| 38 | C.E. C* | 10 | 0.21 | 10 | 2 | 100 | 0 | 0 | 1 |
| 39 | C.E. C* | 10 | 0.17 | 15 | 2 | 100 | 0 | 0 | 1 |
| 40 | C.E. C* | 20 | 0.18 | 8 | 2 | 35 | 0 | 0 | 1 |
| 41 | C.E. C* | 20 | 0.17 | 10 | 2 | 27 | 0 | 0 | 0 |
| 42 | C.E. C* | 20 | 0.18 | 15 | 2 | 42 | 0 | 0 | 0 |
| 43 | C.E. C* | 30 | 0.13 | 8 | 4 | 60 | 0 | 0 | 0 |
| 44 | C.E. C* | 30 | 0.15 | 10 | 4 | 26 | 0 | 0 | 1 |
| 45 | C.E. C* | 30 | 0.15 | 15 | 5 | 24 | 0 | 0 | 1 |

*Not an example of the invention.

TABLE III (Continued)

| SAMPLE NO. | RESIN | % X-LINKER BTL 75108 | DRY FILM THICK. MILS | BAKE TIME | MEK DR | WEDGEBEND LOSS, mm | AUTOCLAVE | | 20 INCH-LB REVERSE IMPACT |
|---|---|---|---|---|---|---|---|---|---|
| | | | | | | | BLUSH | ADHESION | |
| 46 | Ex. 3 | 10 | 0.20 | 8 | 10 | 28 | 0 | 0 | 1 |
| 47 | Ex. 3 | 10 | 0.23 | 10 | 10 | 41 | 0 | 0 | 1 |
| 48 | Ex. 3 | 10 | 0.20 | 15 | 10 | 35 | 0 | 0 | 0 |
| 49 | Ex. 3 | 20 | 0.20 | 8 | 20 | 38 | 0 | 0 | 0 |
| 50 | Ex. 3 | 20 | 0.19 | 10 | 20 | 50 | 0 | 0 | 1 |
| 51 | Ex. 3 | 20 | 0.20 | 15 | 10 | 44 | 0 | 0 | 0 |
| 52 | Ex. 3 | 30 | 0.19 | 8 | 30 | 70 | 0 | 0 | 0 |
| 53 | Ex. 3 | 30 | 0.16 | 10 | 30 | 47 | 0 | 0 | 1 |
| 54 | Ex. 3 | 30 | 0.18 | 15 | 40 | 43 | 0 | 0 | 1 |

Example 4 Phosphorylation of Advanced Aromatic-Aliphatic Hybrid Epoxy Resin, EEW 1839, with 1 phr $H_3PO_4$ (as 110 Percent Acid) in Ethylene Glycol Monobutyl Ether (50 Percent Solids)

An advanced aromatic/aliphatic hybrid epoxy resin having an EEW of 1891, 95 grams, prepared from a blend of 50 wt. percent bisphenol A based liquid epoxy resin having an EEW of 180 and 50 wt. percent of an aromatic/aliphatic hybrid epoxy resin (diglycidyl ether of dipropoxylated bisphenol A having an EEW of 301) and bisphenol A in a ratio of phenolic hydroxyl equivalents per epoxide equivalent of 0.89:1 was mixed with 10.3 grams ethylene glycol monobutyl ether in a 3-neck 500 ml round bottom flask equipped with mechanical stirrer, condenser and temperature controller. The reactor was padded with nitrogen and heated to 125 °C. A mixture of super phosphoric acid (0.95 gram, 1 percent based on resin solids) and ethylene glycol monobutyl ether (4.75 grams) was added all at once. The reaction mixture exotherms to 120 °C. The reaction mixture was stirred and the temperature maintained for 30 minutes. Then deionized water (1.9 grams) was added to hydrolyze the di- and triesters. The reaction mixture was stirred and heated for an additional 1 hour. Additional solvent (16 grams) was added to give a solid solution of the advanced hybrid epoxy resin phosphate ester (78 percent solids).

The resultant solution contained 50 percent solids with a Gardner viscosity of X+ (1400+ cps). This solution was diluted with DBE solvent (15 grams) to make a 45 percent solids solution with an application viscosity of Gardner R (480 cps).

The solvent-borne formulation was coated on tin-free steel using a drawdown bar to give a dry film thickness of 0.2 mils. The properties of the solvent-borne hybrid phosphate ester are given in Table IV.

Note that the wedgebend test performance of the base resin was unexpectedly improved by making the phosphate ester solvent-borne derivative.

COMPARATIVE EXPERIMENT D

The procedure of Comparative Experiment A was used to formulate, coat and test the solid aromatic/aliphatic hybrid epoxy resin with EEW 1891. The results are given in Table IV.

TABLE IV

| SAMPLE NO. | RESIN | % X- LINKER BTL 75108 | DRY FILM THICK. MILS | BAKE TIME | MEK DR | WEDGEBEND LOSS, mm | AUTOCLAVE | | 20 INCH-LB REVERSE IMPACT |
|---|---|---|---|---|---|---|---|---|---|
| | | | | | | | BLUSH | ADHESION | |
| 55 | C.E. D* | 10 | 0.19 | 8 | 20 | 42 | 0 | 0 | 1 |
| 56 | C.E. D* | 10 | 0.30 | 10 | 20 | 31 | 0 | 0 | 0 |
| 57 | C.E. D* | 10 | 0.18 | 15 | 20 | 28 | 0 | 0 | 0 |
| 58 | C.E. D* | 20 | 0.21 | 8 | 40 | 43 | 0 | 0 | 1 |
| 59 | C.E. D* | 20 | 0.18 | 10 | 30 | 37 | 0 | 0 | 1 |
| 60 | C.E. D* | 20 | 0.23 | 15 | 30 | 29 | 0 | 0 | 0 |
| 61 | Ex. 4 | 10 | 0.22 | 8 | 20 | 24 | 0 | 0 | 0 |
| 62 | Ex. 4 | 10 | 0.22 | 10 | 10 | 30 | 0 | 0 | 0 |
| 63 | Ex. 4 | 10 | 0.21 | 15 | 20 | 25 | 0 | 0 | 0 |
| 64 | Ex. 4 | 20 | 0.20 | 8 | 40 | 22 | 0 | 0 | 0 |
| 65 | Ex. 4 | 20 | 0.25 | 10 | 60 | 25 | 0 | 1 | 1 |
| 66 | Ex. 4 | 20 | 0.21 | 15 | 60 | 20 | 0 | 0 | 1 |
| 67 | Ex. 4 | 30 | 0.19 | 8 | 60 | 37 | 0 | 0 | 0 |
| 68 | Ex. 4 | 30 | 0.23 | 10 | 120 | 30 | 0 | 0 | 0 |
| 69 | Ex. 4 | 30 | 0.23 | 15 | 180 | 29 | 0 | 0 | 1 |

*Not an example of the invention.

Example 5 Phosphorylation of Advanced Epoxy Resin, EEW 1675, with 0.5 phr $H_3PO_4$ (as 110 Percent Acid) in Ethylene Glycol Monobutyl Ether (70 Percent Solids)

The phosphorylation procedure used in Example 1 was followed except that the quantity of super phosphoric acid used was 0.5 grams, (0.027 mole). The above formulation was formulated as in Example 1 except that only the 20 percent crosslinker formulation was made. The above formulation was coated on TFS and tested as in Example 1. The results are given in Table V.

Example 6 Phosphorylation of Advanced Epoxy Resin, EEW 1675, with 0.75 phr $H_3PO_4$ (as 110 Percent Acid) in Ethylene Glycol Monobutyl Ether (70 Percent Solids)

The procedure in Example 5 was used except that the quantity of super phosphoric acid used was 3.75 g (0.04 mole). The coating test results are given in Table V.

Example 7 Phosphorylation of Advanced Epoxy Resin, EEW 1675, with 2.0 phr $H_3PO_4$ (as 110 Percent Super Phosphoric Acid) in Ethylene Glycol Monobutyl Ether

The procedure in Example 5 was used except that the quantity of super phosphoric acid used was 10 g (0.1 mole). The coating test results are given in Table V.

TABLE V

| SAMPLE NO. | RESIN | % X- LINKER BTL 75108 | DRY FILM THICK. MILS | BAKE TIME | MEK DR | WEDGEBEND LOSS, mm | AUTOCLAVE | |
|---|---|---|---|---|---|---|---|---|
| | | | | | | | BLUSH | ADHESION |
| 70 | Ex. 5 | 20 | 0.22 | 8 | 20 | 15 | 0 | 0 |
| 71 | Ex. 5 | 20 | 0.22 | 10 | 20 | 32 | 0 | 0 |
| 72 | Ex. 5 | 20 | 0.18 | 15 | 10 | 13 | 0 | 0 |
| 73 | Ex. 6 | 20 | 0.15 | 8 | 20 | 19 | 0 | 0 |
| 74 | Ex. 6 | 20 | 0.18 | 10 | 20 | 27 | 0 | 0 |
| 75 | Ex. 6 | 20 | 0.21 | 15 | 40 | 21 | 0 | 0 |
| 76 | Ex. 7 | 20 | 0.20 | 8 | 150 | 54 | 1.5 | 4 |
| 77 | Ex. 7 | 20 | 0.23 | 10 | 125 | 51 | 2 | 4 |
| 78 | Ex. 7 | 20 | 0.21 | 15 | 300+ | 60 | 1.5 | 4 |

*Not an example of the invention.

Example 8 Phosphorylation of Advanced Aromatic-Hybrid Epoxy Resin, EEW 2000, with 1 phr $H_3PO_4$ (as 110 Percent Super Phosphoric Acid) in Ethylene Glycol Monobutyl Ether

The procedure in Example 4 was followed using an aliphatic liquid diabatic epoxy resin (dipropylene glycol diglycidyl ether), EEW 190 in place of the diglycidyl ether of dipropoxylated bisphenol A. The coating test results are given in Table VI.

COMPARATIVE EXPERIMENT E

The procedure of Comparative Experiment D was followed except that the un-phosphorylated resin from Example 8 was used. The coating test results are given in Table VI.

TABLE VI

| SAMPLE NO. | RESIN | % X- LINKER BTL 75108 | DRY FILM THICK. MILS | BAKE TIME | MEK DR | WEDGEBEND LOSS, mm | AUTOCLAVE | | 20 INCH-LB REVERSE IMPACT |
|---|---|---|---|---|---|---|---|---|---|
| | | | | | | | BLUSH | ADHESION | |
| 79 | Ex. 8 | 10 | 0.19 | 8 | 10 | 19 | 0 | 0 | 0 |
| 80 | Ex. 8 | 10 | 0.28 | 10 | 20 | 26 | 1 | 0 | 0 |
| 81 | Ex. 8 | 10 | 0.26 | 15 | 10 | 25 | 0 | 0 | 1 |
| 82 | Ex. 8 | 20 | 0.26 | 8 | 70 | 26 | 1 | 0 | 0 |
| 83 | Ex. 8 | 20 | 0.2 | 10 | 70 | 25 | 1 | 0 | 0 |
| 84 | Ex. 8 | 20 | 0.24 | 15 | 90 | 35 | 0 | 0 | 0 |
| 85 | Ex. 8 | 30 | 0.18 | 8 | 70 | 38 | 0 | 0 | 0 |
| 86 | Ex. 8 | 30 | 0.23 | 10 | 100 | 42 | 0 | 0 | 0 |
| 87 | Ex. 8 | 30 | 0.15 | 15 | 110 | 25 | 0 | 0 | 1 |
| 88 | C.E. E* | 20 | 0.14 | 8 | 20 | 58 | 1 | 0 | 0 |
| 89 | C.E. E* | 20 | 0.17 | 10 | 40 | 47 | 0 | 0 | 0 |
| 90 | C.E. E* | 20 | 0.16 | 15 | 30 | 39 | 0 | 2 | 0 |
| 91 | C.E. E* | 30 | 0.18 | 8 | 50 | 35 | 0 | 0 | 0 |
| 92 | C.E. E* | 30 | 0.21 | 10 | 70 | 58 | 0 | 0 | 0 |
| 93 | C.E. E* | 30 | 0.17 | 15 | 90 | 53 | 0 | 0 | 0 |

*Not an example of the invention.

## Claims

1. A nonaqueous solution composition which comprises a mixture of
(A) the product resulting from reacting
(1) at least one epoxy-containing compound containing an average of more than one vicinal epoxide group per molecule; with
(2) at least one phosphorus-containing compound selected from the group consisting of
(a) phosphoric acid;
(b) super phosphoric acid; and
(c) a combination of (a) and (b); and
wherein component (2) is employed in an amount which provides a ratio of moles of component (2) to component (1) of from 0.02:1 to 5:1; and
(B) at least one organic solvent for component (A);
wherein component (A) is employed in an amount of from 100 to 10 percent by weight based upon the combined weight of components (A) and (B); and component (B) is employed in an amount of from 10 to 90 percent by weight based upon the combined weight of components (A) and (B).

2. The composition of Claim 1 wherein component (A) is the product resulting from reacting
(1) at least one epoxy-containing compound containing an average of more than one vicinal epoxide group per molecule; with
(2) at least one phosphorus-containing compound selected from the group consisting of
(a) phosphoric acid;
(b) super phosphoric acid; and
(c) a combination of (a) and (b); and
(3) water;
wherein component (2) is employed in an amount which provides a ratio of moles of component (2) to component (1) of from 0.02:1 to 5:1; and component (3) is employed in an amount which provides a ratio of moles of component (3) to moles of component (1) of from zero:1 to 100:1.

3. A composition of Claim 2 wherein (a) component (2) is employed in an amount which provides a ratio of moles of component (2) to component (1) of from 0.1:1 to 2:1; (b) component (3) is employed in an amount which provides a ratio of moles of component (3) to moles of component (1) of from zero:1 to 50:1; (c) component (A) is employed in an amount of from 100 to 10 percent by weight based upon the combined weight of components (A) and (B); and (d) component (B) is employed in an amount of from 10 to 90 percent by weight based upon the combined weight of components (A) and (B).

4. A composition of Claim 2 wherein (a) component (2) is employed in an amount which provides a ratio of moles of component (2) to component (1) of from 0.2:1 to 1:1; (b) component (3) is employed in an amount which provides a ratio of moles of component (3) to moles of component (1) of from zero:1 to 20:1; (c) component (A) is employed in an amount of from 80 to 20 percent by weight based upon the combined weight of components (A) and (B); and (d) component (B) is employed in an amount of from 20 to 80 percent by weight based upon the combined weight of components (A) and (B).

5. A composition of Claim 1 or 2 wherein (a) component (1) is an epoxy resin represented by the following formulas I, II, III, IV or V

Formula I

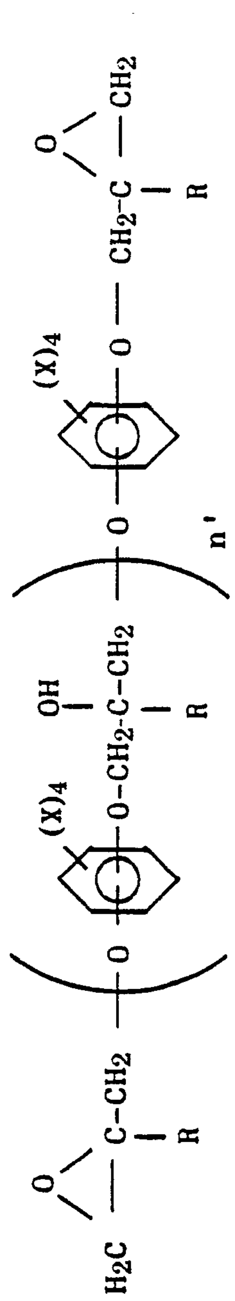

Formula II

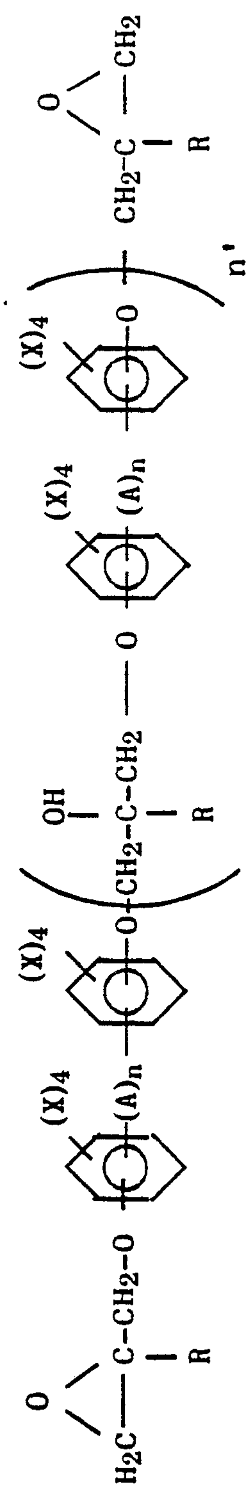

Formula III

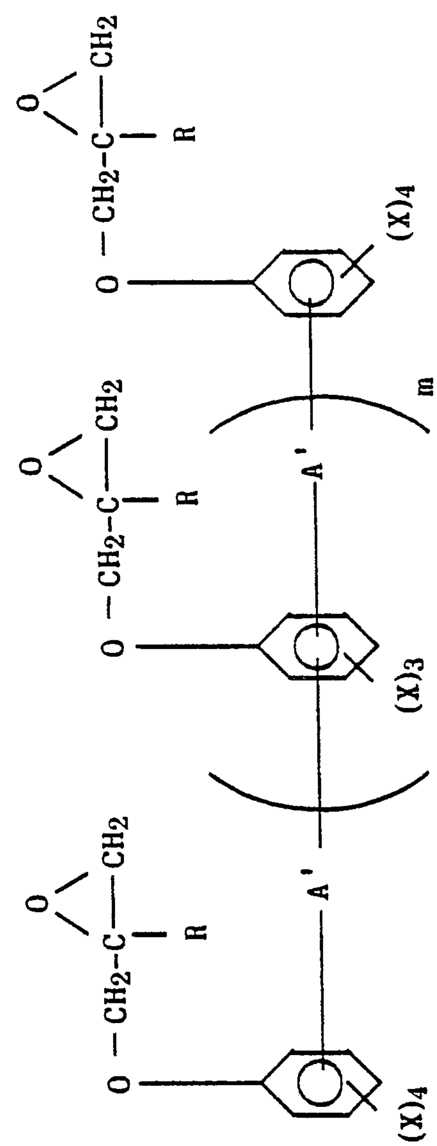

Formula IV

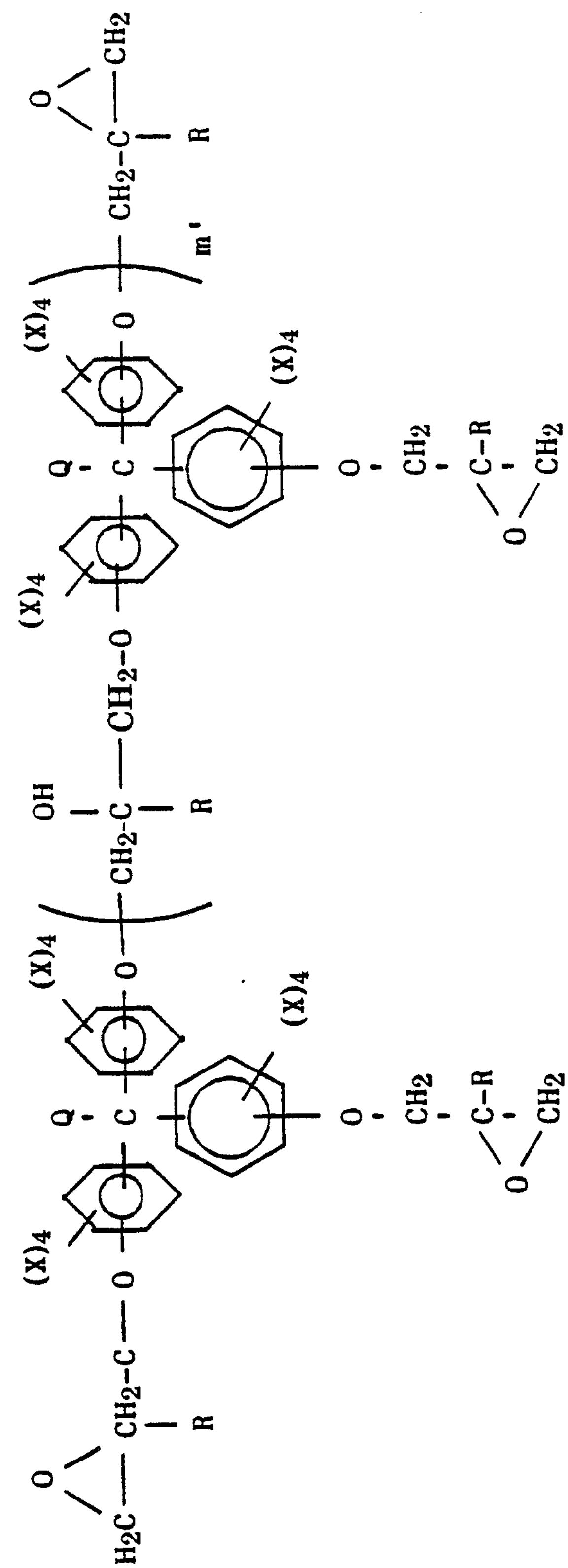

Formula V

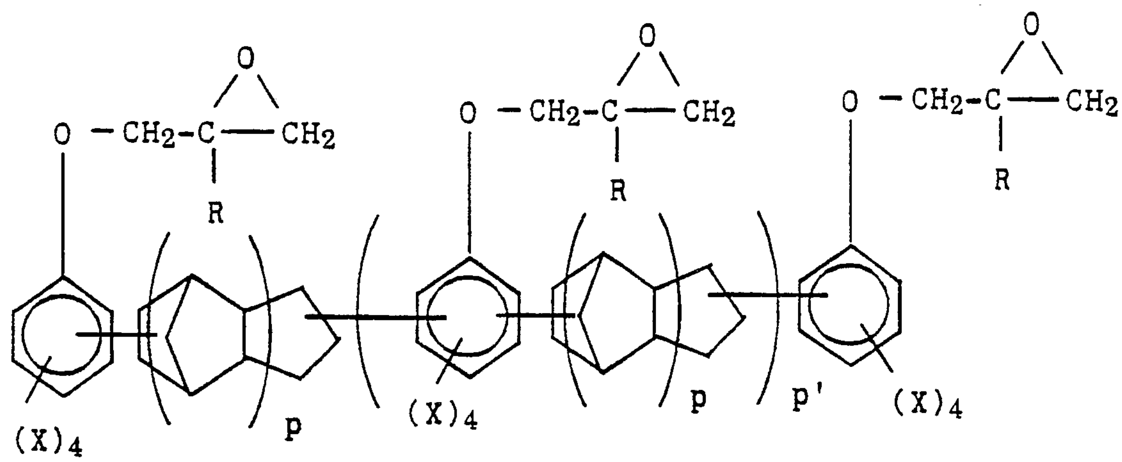

wherein each A is independently a divalent hydrocarbyl group having from 1 to 12 carbon atoms; each A′ is independently a divalent hydrocarbyl group having from 1 to 10 carbon atoms; each Q is independently hydrogen or an alkyl group having from 1 to 4 carbon atoms; each R is independently hydrogen or an alkyl group having from 1 to 3 carbon atoms; each X is independently hydrogen, a hydrocarbyl or hydrocarbyloxy group having from 1 to 12 carbon atoms or a halogen atom; m has a value from 0.01 to 8; n has a value of zero or 1; n′ has an average value from 0 to 200; each p suitably has a value from zero to 10; and each p′ suitably has a value from zero to 8; and

(b) component (B) is an alcohol, ketone, glycol, glycol ether, aromatic hydrocarbon or a combination thereof.

6. A composition of Claim 5 wherein (a) component (1) is a diglycidyl ether of bisphenol A, bisphenol F, bisphenol K, bisphenol S, or any combination thereof; and (b) component (B) is toluene, ethylene glycol monobutyl ether, ethylene glycol monohexyl ether, or any combination thereof.

7. A curable composition which comprises (I) a composition of Claim 1 or 2 and (II) a curing quantity of at least one curing agent for component (I).

8. The composition of Claim 7 wherein component (II) is a polyisocyanate, blocked polyisocyanate, alkylolated urea-aldehyde resin, alkylolated melamine-aldehyde resin, alkylolated phenol-aldehyde resin, or any combination thereof.

9. The composition of Claim 8 wherein component (II) is a methylolated urea-formaldehyde resin, methylolated melamine-formaldehyde resin, methylolated phenol-formaldehyde resin, or any combination thereof.

10. An article coated with a curable composition of Claim 7 which composition has subsequently been cured.

11. A process for preparing a nonaqueous solution composition which comprises admixing (A) the product resulting from reacting

(1) at least one epoxy-containing compound containing an average of more than one vicinal epoxide group per molecule; with

(2) at least one phosphorus-containing compound selected from the group consisting of

(a) phosphoric acid;

(b) super phosphoric acid; and

(c) a combination of (a) and (b); and

wherein component (2) is employed in an amount which provides a ratio of moles of component (2) to component (1) of from 0.02:1 to 5:1; and (B) at least one organic solvent for component (A); and wherein component (A) is employed in an amount of from 100 to 10 percent by weight based upon the combined weight of components (A) and (B); and component (B) is employed in an amount of from 10 to 90 percent by weight based upon the combined weight of components (A) and (B).

12. The process of Claim 1 wherein component (A) is the product resulting from reacting

(1) at least one epoxy-containing compound containing an average of more than one vicinal epoxide group per molecule; with

(2) at least one phosphorus-containing compound selected from the group consisting of

(a) phosphoric acid;
(b) super phosphoric acid; and
(c) a combination of (a) and (b); and
(3) water;

wherein component (2) is employed in an amount which provides a ratio of moles of component (2) to component (1) of from 0.02:1 to 5:1; and component (3) is employed in an amount which provides a ratio of moles of component (3) to moles of component (1) of from zero:1 to 100:1.